# EUROPEAN PATENT SPECIFICATION

(11) **EP 0 461 597 B1**
(45) Date of publication and mention of the grant of the patent: **01.03.1995**
(21) Application number: 91109515.6
(22) Date of filing: 10.06.1991
(51) Int. Cl.: C07F 7/12

(54) **Method for preparing monohalogenosilanes**
Verfahren zur Herstellung von Monohalogenosilanen
Procédé pour la préparation de monohalogénosilanes

(30) Priority: 13.06.1990 JP 154915/90
(43) Date of publication of application: 18.12.1991
(73) Proprietor: Shin-Etsu Chemical Co., Ltd., Chiyoda-ku Tokyo 100 (JP)
(72) Inventor: Kubota, Tohru, SHIN-ETSU CHEMICAL CO., LTD., Kubiki-mura, Nakakubiki-gun, Nigata 942 (JP); Kurosaki, Tadao, SHIN-ETSU CHEMICAL CO., LTD., Kubiki-mura, Nakakubiki-gun, Nigata 942 (JP); Ishihara, Toshinobu, SHIN-ETSU CHEMICAL CO., LTD., Kubiki-mura, Nakakubiki-gun, Nigata 942 (JP); Endo, Mikio, SHIN-ETSU CHEMICAL CO., LTD., Kubiki-mura, Nakakubiki-gun, Nigata 942 (JP)
(74) Representative: Bühling, Gerhard, Dipl.-Chem.

(56) References cited:
- EP-A- 0 138 670
- EP-A- 0 278 368
- DE-B- 1 220 417
- US-A- 3 549 680
- US-A- 4 096 161
- JOURNAL OF ORGANOMETALLIC CHEMISTRY vol. 367, no. 1-2, 1989, pages 27 - 37;RUBINSZTAJN, S. ET AL: 'CONDENSATION OF MODEL LINEAR SILOXANE OLIGOMERSPOSSESSING SILANOL AND SILYL CHLORIDE END GROUPS. THE MECHANISM OF SILANOLSILYLATION BY A CHLOROSILANE IN THE PRESENCE OF NEUTRAL NUCLEOPHILES'

## Description

The present invention relates to a method for preparing monohalogenosilane which is useful as a starting material for synthesizing a silylating agent or a variety of organosilicon compounds.

Japanese Patent Provisional Publication 52-65226 discloses a method for preparing a monohalogenosilane from non-halogenated disiloxane. This method comprises the step of reacting a non-halogenated disiloxane, i. e., non-halogenodisiloxane with a polyhalogenosilane in the presence of a hexaalkylphosphoric acid triamide hydrochloride. However, it has recently been recognized that the hexamethylphosphoric acid triamide is a powerful carcinogenic substance and as a result, it becomes difficult to get and handle the same and to handle the waste liquor originated from the reaction.

It is an object of the present invention to provide a method for easily preparing a monohalogenosilane in a high yield without using such hexaalkylphosphoric acid triamides which suffer from the foregoing disadvantages.

The foregoing object of the present invention can effectively be achieved by providing a method for preparing a monohalogenosilane represented by the following general formula (IV):

R¹R²R³SiX (IV)

which comprises the step of subjecting, to a rearrangement reaction, an organodisiloxane represented by the following general formula (I):

(R¹R²R³Si)₂O (I)

and a polyhalogenosilane represented by the following general formula (II):

R⁴ₙSiX₄₋ₙ (II)

in the presence of active carbon or an ammonium salt represented by the following general formula (III):

R⁵R⁶R⁷R⁸NY (III)

as a catalyst. The method of the present invention can be represented by the following reaction scheme: 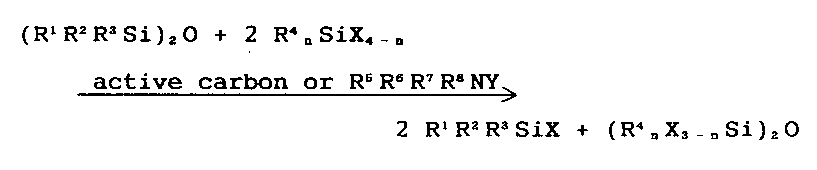
Wherein R¹, R² and R³ each independently represents a hydrogen atom or a monovalent hydrocarbon group in which a part or whole of the hydrogen atoms may be substituted with other atoms or groups; R⁴ represents a monovalent hydrocarbon group in which a part or whole of the hydrogen atoms may be substituted with other atoms or groups; X represents a halogen atom; n is O, 1 or 2; R⁵, R⁶ and R⁷ each independently represents a monovalent hydrocarbon group and R⁸ represents a hydrogen atom or a monovalent hydrocarbon group, a part or whole of the hydrogen atoms of the hydrocarbon group being optionally substituted with other atoms or groups; and Y represents a monovalent anion.

The method for preparing a monohalogenosilane according to the present invention permits the easy preparation of monohalogenosilanes, in a high yield, which are useful as starting materials for use in making silylating agents as well as a variety of organosilicon compounds without using any harmful hexaalkylphosphoric acid triamide type catalyst.

The present invention will hereinafter be explained in more detail with reference to the following preferred embodiments.

In the organodisiloxane represented by the general formula (I) used as one of the starting materials, hydrogen atom or the monovalent hydrocarbon group represented by R¹, R² and R³. The monovalent hydrocarbon group is, for instance, a saturated or unsaturated non-cyclic aliphatic hydrocarbon group, cyclic aliphatic hydrocarbon group, aryl group or aralkyl group in which a part or whole of the hydrogen atom(s) may further be substituted with, for instance, halogen atoms and/or cyano group. Specific examples of such organodisiloxanes represented by the general formula (I) having substituents R¹, R² and R³ are 1,1,3,3-tetramethyldisiloxane, 1,1,3,3-tetradiisopropyldisiloxane, hexamethyldisiloxane, 1,1,3,3-tetramethyl-1,3-divinyldisiloxane, 1,3-diallyl-1,1,3,3-tetramethyldisiloxane, 1,3-diethynyl-1,1,3,3-tetramethyldisiloxane, 1,3-cyclohexyl-1,1,3,3-tetramethyldisiloxane, 1,3-dicyanoethyl-1,1,3,3-dimethyldisiloxane and 1,3-dimethyl-1,1,3,3-tetraphenyldisiloxane.

In the polyhalogenosilane represented by the general formula (II) used as the other starting material, the monovalent hydrocarbon group in the definition of R⁴ is the same as those defined above in connection with R¹, R² and R³ of the organodisiloxane represented by the general formula (I). X represents a halogen atom and n is 0, 1 or 2. Specific examples of the polyhalogenosilanes used herein are dimethyldichlorosilane, dimethyldibromosilane, methyltrichlorosilane, diphenyldichlorosilane, phenyltrichlorosilane, methylphenyldichlorosilane, methylvinyldichlorosilane and tetrachlorosilane.

In the ammonium salt represented by the general formula (III) used as the catalyst, R⁵, R⁶ and R⁷ each independently represents a monovalent hydrocarbon groups, and R⁸ represents a hydrogen atom or a monovalent hydrocarbon group. The monovalent hydrocarbon group is the same as those defined above in connection with R¹, R² and R³ of the organodisiloxane represented by the general formula (I). Examples of Y which represents a monovalent anion are chlorine, bromine, sulfate and perchlorate ions. Specific examples of the ammonium salts are tertiary ammonium salts such as trimethylamine hydrochloride, triethylamine hydrochloride, tri-n-butylamine hydrochloride and dimethylphenylamine hydrobromide; and quaternary ammonium salts such as tetra-n-butylammonium chloride, tetra-n-butylammonium bromide and tetramethylammonium sulfate.

Examples of the subject compounds represented by the foregoing general formula (IV) include dimethylchlorosilane, dimethylvinylchlorosilane, allyldimethylchlorosilane, ethynyldimethylchlorosilane, cyanoethyldimethyldichlorosilane, methyldiphenylchlorosilane, diisopropylchlorosilane and trimethylbromosilane.

The foregoing reaction is carried out by introducing, into a flask, an organodisiloxane and a polyhalogenosilane together with active carbon or an ammonium salt, adding a small amount of water and stirring the resulting reaction mixture for several hours. The reaction solution is then distilled to recover a monohalogenosilane.

In this reaction, the amount of the active carbon or the ammonium salt used as the catalyst may widely vary, and it is in general added to the reaction system in an amount ranging from 0.001 to 80% by weight, preferably 0.1 to 10% by weight on the basis of the total weight of the starting materials. Moreover, the reaction temperature is desirably controlled to the range of from 0 to 200 °C, preferably 20 to 150 °C.

This rearrangement reaction easily proceeds under an acidic condition and, therefore, it is effective, when the reaction proceeds at a slow rate, to add a small amount of water or a proton-type solvent to the reaction system to thus cause a reaction with the halogenosilane to give an acid.

When a tertiary ammonium salt is used as the ammonium salt of the foregoing general formula (III), it is also possible to introduce, into a reactor, the ammonium salt in the form of a tertiary amine together with the foregoing two kinds of starting materials. In this case, the amine can be converted into the tertiary ammonium salt in vitro by adding an acid or water or a compound such as an alcohol which can generate an acid through the reaction with the polyhalogenosilane.

The present invention will hereunder be explained in more detail with reference to the following non-limitative working Examples.

### Example 1: Preparation of Trimethylchlorosilane

To a 1ℓ volume four-necked flask equipped with a stirring machine, a reflux condenser, a dropping funnel and a thermometer, there were added 324.8g (2.0 moles) of hexamethyldisiloxane, 271.0g (2.1 moles) of dimethyldichlorosilane and 10g of active carbon, followed by the dropwise addition of 1.8g (0.1 mole) of water through the dropping funnel at room temperature and stirring the mixture at that temperature for 5 hours. The reaction solution was then distilled to give 349.0g (yield = 80.3%) of trimethylchlorosilane. This substance was confirmed in terms of IR spectra, NMR spectra and mass spectra. NMR spectra is as follows;
¹HNMR(CDCl₃) : δ (ppm)
(CH₃)₃SiCl
(CH₃)₃ ··· 0.40 (9H,s)

### Example 2: (1) Preparation of Dimethylvinylchlorosilane

To a 1ℓ volume four-necked flask equipped with a stirring machine, a reflux condenser, a dropping funnel and a thermometer, there were added 372.8g (2.0 moles) of 1,1,3,3-tetramethyl-1,3-divinyldisiloxane, 271.0g (2.1 moles) of dimethyldichlorosilane and 11.1g (0.05 mole) of tri-n-butylamine hydrochloride, followed by the dropwise addition of 1.8g (0.1 mole) of water through the dropping funnel at room temperature and stirring the mixture at that temperature for 5 hours. The reaction solution was then distilled to give 396.7g (yield = 82.2%) of dimethylvinylchlorosilane. This substance was confirmed in terms of IR spectra, NMR spectra and mass spectra. NMR spectra is as follows;
¹HNMR(CDCl₃) : δ (ppm)
(CH₂=CH)(CH₃)₂SiCl
(CH₃)₂ ··· 0.44 (6H,s)
(CH₂=CH) ··· 5.55 - 6.57 (3H,m)

### Example 3: (2) Preparation of Dimethylvinylchlorosilane

The same procedures as those used in Example 2 were repeated except that 9.3g (0.05 mole) of tri-n-butylamine was substituted for the tri-n-butylamine hydrochloride used in Example 2 to give 388.8g (yield = 80.6%) of dimethylvinylchlorosilane. This substance was confirmed in terms of IR spectra, NMR spectra and mass spectra. NMR spectra is as follows;
¹HNMR(CDCl₃) : δ (ppm)
(CH₂=CH)(CH₃)₂SiCl
(CH₃)₂ ··· 0.44 (6H,s)
(CH₂=CH) ··· 5.55 - 6.57 (3H,m)

### Example 4: Preparation of Dimethylchlorosilane

To a 1ℓ volume four-necked flask equipped with a stirring machine, a reflux condenser, a dropping funnel and a thermometer, there were added 268.7g (2.0 moles) of 1,1,3,3-tetramethyldisiloxane, 271.0g (2.1 moles) of dimethyldichlorosilane and 16.1g (0.05 mole) of tetra-n-butylammonium bromide, followed by the dropwise addition of 1.8g (0.1 mole) of water through the dropping funnel at room temperature and stirring the mixture at that temperature for 5 hours. The reaction solution was then distilled to give 283.5g (yield = 74.9%) of dimethylchlorosilane. This substance was confirmed in terms of IR spectra, NMR spectra and mass spectra. NMR spectra is as follows;
¹HNMR(CDCl₃) : δ (ppm)
(CH₃)₂(H)SiCl
(CH₃)₂ ··· 0.49 (6H,d)
(H) ··· 4.81 (1H,q)

### Example 5: Preparation of Allyldimethylchlorosilane

To a 1ℓ volume four-necked flask equipped with a stirring machine, a reflux condenser, a dropping funnel and a thermometer, there were added 428.9g (2.0 moles) of 1,3-diallyl-1,1,3,3-tetramethyldisiloxane, 209.3g (1.4 moles) of methyltrichlorosilane and 5.5g (0.05 mole) of tetramethylammonium chloride, followed by the dropwise addition of 1.8g (0.1 mole) of water through the dropping funnel at room temperature and stirring the mixture at that temperature for 5 hours. The reaction solution was then distilled to give 415.4g (yield = 77.1%) of allyldimethylchlorosilane. This substance was confirmed in terms of IR spectra, NMR spectra and mass spectra. NMR spectra is as follows;
¹HNMR(CDCl₃) : δ (ppm)
(CH₂=CHCH₂)(CH₃)₂SiCl
(CH₃)₂ ··· 0.40 (6H,s)
(CH₂=CHCH₂) ··· 1.71 - 1.84 (2H,m) 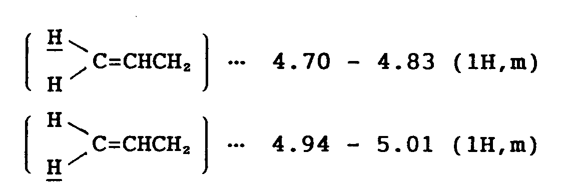
(CH₂=CHCH₂) ··· 5.37 - 6.07 (1H,m)

### Example 6: Preparation of Cyanoethyldimethylchlorosilane

To a 1ℓ volume four-necked flask equipped with a stirring machine, a reflux condenser, a dropping funnel and a thermometer, there were added 480.9g (2.0 moles) of 1,3-dicyanoethyl-1,1,3,3-tetramethyldisiloxane, 271.0g (2.1 moles) of dimethyldichlorosilane and 9.3g (0.05 mole) of tri-n-butylamine, followed by the dropwise addition of 1.8g (0.1 mole) of water through the dropping funnel at room temperature and stirring the mixture at 50 °C for 2 hours. The reaction solution was then distilled to give 407.6g (yield = 69.0%) of cyanoethyldimethylchlorosilane. This substance was confirmed in terms of IR spectra, NMR spectra and mass spectra. NMR spectra is as follows;
¹HNMR(CDCl₃) : δ (ppm)
(CN-CH₂CH₂)(CH₃)₂SiCl
(CH₃)₂ ··· 0.48 (6H,s)
(CN-CH₂CH₂) ··· 1.17 (2H,t)
(CN-CH₂CH₂) ··· 2.40 (2H,t)

## Claims

1. A method for preparing a monohalogenosilane represented by the following general formula (IV):
R¹R²R³SiX (IV)
(wherein R¹, R² and R³ each independently represents a hydrogen atom or a monovalent hydrocarbon group in which a part or whole of the hydrogen atoms may be substituted with other atoms and/or groups and X represents a halogen atom)
comprising the step of subjecting, an organodisiloxane represented by the following general formula (I):
(R¹R²R³Si)₂O (I)
(wherein R¹, R² and R³ each independently represents a hydrogen atom or a monovalent hydrocarbon group in which a part or whole of the hydrogen atoms may be substituted with other atoms and/or groups)
and a polyhalogenosilane represented by the following general formula (II):
R⁴ₙSiX₄₋ₙ (II)
(R⁴ represents a monovalent hydrocarbon group in which a part or whole of the hydrogen atoms may be substituted with other atoms and/or groups; and X represents a halogen atom; and n is 0, 1 or 2)
in the presence of active carbon or an ammonium salt represented by the following general formula (III):
R⁵R⁶R⁷R⁸NY (III)
(R⁵, R⁶ and R⁷ each independently represents a monovalent hydrocarbon group and R⁸ represents a hydrogen atom or a monovalent hydrocarbon group, a part or whole of the hydrogen atoms of the hydrocarbon group being optionally substituted with other atoms and/or groups; and Y represents a monovalent anion)
as a catalyst.

2. The method for preparing a monohalogenosilane as set forth in claim 1 wherein the active carbon or the ammonium salt is used in an amount ranging from 0.1 to 10% by weight on the basis of the total weight of the organodisiloxane and the polyhalogenosilane.

3. The method for preparing a monohalogenosilane as set forth in claim 1 wherein the reaction temperature ranges from 20 to 150 °C.

4. The method for preparing a monohalogenosilane as set forth in claim 1 wherein the reaction is carried out under an acidic condition.

5. The method for preparing a monohalogenosilane as set forth in claim 1 wherein, in the general formula (I), the substituent R¹, R² and R³ each represents a monovalent hydrocarbon group and the hydrocarbon group is a member selected from the group consisting of saturated or unsaturated non-cyclic aliphatic groups, cyclic aliphatic groups, aryl groups and aralkyl groups.

6. The method for preparing a monohalogenosilane as set forth in claim 5 wherein a part of the hydrogen atoms of the hydrocarbon group is substituted with halogen atoms and/or cyano groups.

7. The method for preparing a monohalogenosilane as set forth in claim 1 wherein the organodisiloxane represented by the general formula (I) is a member selected from the group consisting of 1,1,3,3-tetramethyldisiloxane, 1,1,3,3-tetradiisopropyldisiloxane, hexamethyldisiloxane, 1,1,3,3-tetramethyl-1,3-divinyldisiloxane, 1,3-diallyl-1,1,3,3-tetramethyldisiloxane, 1,3-diethynyl-1,1,3,3-tetramethyldisiloxane, 1,3-cyclohexyl-1,1,3,3-tetrametyldisiloxane, 1,3-dicyanoethyl-1,1,3,3-dimethyldisiloxane and 1,3-dimethyl-1,1,3,3-tetraphenyldisiloxane.

8. The method for preparing a monohalogenosilane as set forth in claim 1 wherein the substituent R⁴ of the polyhalogenosilane represented by the general formula (II) is a hydrocarbon group selected from the group consisting of saturated or unsaturated non-cyclic aliphatic groups, cyclic aliphatic groups, aryl groups and aralkyl groups.

9. The method for preparing a monohalogenosilane as set forth in claim 8 wherein a part of the hydrogen atoms of the hydrocarbon group is substituted with halogen atoms and/or cyano groups.

10. The method for preparing a monohalogenosilane as set forth in claim 1 wherein the polyhalogenosilane represented by the general formula (II) is a member selected from the group consisting of dimethyldichlorosilane, dimethyldibromosilane, methyltrichlorosilane, diphenyldichlorosilane, phenyltrichlorosilane, methylphenyldichlorosilane, methylvinyldichlorosilane and tetrachlorosilane.

11. The method for preparing a monohalogenosilane as set forth in claim 1 wherein, in the general formula (III), the substituents R⁵, R⁶, R⁷ and R⁸ each represents a monovalent hydrocarbon group and it is a member selected from the group consisting of saturated or unsaturated non-cyclic aliphatic groups, cyclic aliphatic groups, aryl groups and aralkyl groups.

12. The method for preparing a monohalogenosilane as set forth in claim 11 wherein a part of the hydrogen atoms of the hydrocarbon group is substituted with halogen atoms and/or cyano groups.

13. The method for preparing a monohalogenosilane as set forth in claim 1 wherein the substituent Y in the general formula (III) is a member selected from the group consisting of chlorine, bromine, sulfate and perchlorate ions.

14. The method for preparing a monohalogenosilane as set forth in claim 1 wherein the ammonium salt represented by the general formula (III) is a member selected from the group consisting of tertiary ammonium salts such as trimethylamine hydrochloride, triethylamine hydrochloride, tri-n-butylamine hydrochloride and dimethylphenylamine hydrobromide; and quaternary ammonium salts such as tetra-n-butylammonium chloride, tetra-n-butylammonium bromide and tetramethylammonium sulfate.

15. The method for preparing a monohalogenosilane as set forth in claim 1 wherein the monohalogenosilane represented by the general formula (IV) is a member selected from the group consisting of dimethylchlorosilane, dimethylvinylchlorosilane, allyldimethylchlorosilane, ethynyldemithylchlorosilane, cyanoethyldimethyldichlorosilane, methyldiphenylchlorosilane, diisopropylchlorosilane and trimethylbromosilane.

## Patentansprüche

1. Verfahren zur Herstellung eines Monohalogensilans, dargestellt durch die nachstehende allgemeine Formel (IV):
R¹R²R³SiX (IV)
(wobei R¹, R² und R³ jeweils unabhängig ein Wasserstoffatom oder eine einwertige Kohlenwasserstoffgruppe darstellen, in der ein Teil oder alle der Wasserstoffatome durch andere Atome und/oder Gruppen substituiert sein können und X ein Halogenatom darstellt)
umfassend den Schritt der Unterwerfung eines durch die nachstehende allgemeine Formel (I) dargestellten Organodisiloxans:
(R¹R²R³Si)₂O (I)
(wobei R¹, R² und R³ jeweils unabhängig ein Wasserstoffatom oder eine einwertige Kohlenwasserstoffgruppe darstellen, in der ein Teil oder alle der Wasserstoffatome durch andere Atome und/oder Gruppen substituiert sein können)
und eines durch die nachstehende allgemeine Formel (II) dargestellten Polyhalogensilans:
R⁴ₙSiX₄₋ₙ (II)
(wobei R⁴ eine einwertige Kohlenwasserstoffgruppe darstellt, in der ein Teil oder alle der Wasserstoffatome durch andere Atome und/oder Gruppen substituiert sein können und X ein Halogenatom darstellt, und n 0, 1 oder 2 ist)
in Gegenwart von Aktivkohle oder eines durch die nachstehende allgemeine Formel (III) dargestellten Ammoniumsalzes:
R⁵R⁶R⁷R⁸NY (III)
(wobei R⁵, R⁶ und R⁷ jeweils unabhängig eine einwertige Kohlenwasserstoffgruppe darstellen und R⁸ ein Wasserstoffatom oder eine einwertige Kohlenwasserstoffgruppe darstellt, wobei ein Teil oder alle der Wasserstoffatome der Kohlenwasserstoffgruppe gegebenenfalls durch andere Atome und/oder Gruppen substituiert sein können und Y ein einwertiges Anion darstellt)
als einem Katalysator.

2. Verfahren zur Herstellung eines Monohalogensilans nach Anspruch 1, wobei die Aktivkohle oder das Ammoniumsalz in einer Menge verwendet wird, die im Bereich von 0,1 bis 10 Gew.-% liegt, bezogen auf das Gesamtgewicht des Organodisiloxans und des Polyhalogensilans.

3. Verfahren zur Herstellung eines Monohalogensilans nach Anspruch 1, wobei die Reaktionstemperatur im Bereich von 20 bis 150 °C liegt.

4. Verfahren zur Herstellung eines Monohalogensilans nach Anspruch 1, wobei die Umsetzung unter sauren Bedingungen durchgeführt wird.

5. Verfahren zur Herstellung eines Monohalogensilans nach Anspruch 1, wobei in der allgemeinen Formel (I) der Substituent R¹, R² und R³ jeweils eine einwertige Kohlenwasserstoffgruppe darstellt und die Kohlenwasserstoffgruppe aus der Gruppe bestehend aus gesättigten oder ungesättigten nicht-cyclischen aliphatischen Gruppen, cyclischen aliphatischen Gruppen, Arylgruppen und Aralkylgruppen ausgewählt ist.

6. Verfahren zur Herstellung eines Monohalogensilans nach Anspruch 5, wobei ein Teil der Wasserstoffatome der Kohlenwasserstoffgruppe durch Halogenatome und/oder Cyanogruppen substituiert ist.

7. Verfahren zur Herstellung eines Monohalogensilans nach Anspruch 1, wobei das durch die allgemeine Formel (I) dargestellte Organodisiloxan aus der Gruppe bestehend aus 1,1,3,3-Tetramethyldisiloxan, 1,1,3,3-Tetradiisopropyldisiloxan, Hexamethyldisiloxan, 1,1,3,3-Tetramethyl-1,3-divinyldisiloxan, 1,3-Diallyl-1,1,3,3-tetramethyldisiloxan, 1,3-Diethinyl-1,1,3,3-tetramethyldisiloxan, 1,3-Cyclohexyl-1,1,3,3-tetramethyldisiloxan, 1,3-Dicyanoethyl-1,1,3,3-dimethyldisiloxan und 1,3-Dimethyl-1,1,3,3-tetraphenyldisiloxan ausgewählt ist.

8. Verfahren zur Herstellung eines Monohalogensilans nach Anspruch 1, wobei der Substituent R⁴ des durch die allgemeine Formel (II) dargestellten Polyhalogensilans eine Kohlenwasserstoffgruppe ist, ausgewählt aus der Gruppe bestehend aus gesättigten oder ungesättigten nicht-cyclischen aliphatischen Gruppen, cyclischen aliphatischen Gruppen, Arylgruppen und Aralkylgruppen.

9. Verfahren zur Herstellung eines Monohalogensilans nach Anspruch 8, wobei ein Teil der Wasserstoffatome der Kohlenwasserstoffgruppe durch Halogenatome und/oder Cyanogruppen substituiert ist.

10. Verfahren zur Herstellung eines Monohalogensilans nach Anspruch 1, wobei das durch die allgemeine Formel (II) dargestellte Polyhalogensilan aus der Gruppe bestehend aus Dimethyldichlorsilan, Dimethyldibromsilan, Methyltrichlorsilan, Diphenyldichlorsilan, Phenyltrichlorsilan, Methylphenyldichlorsilan, Methylvinyldichlorsilan und Tetrachlorsilan ausgewählt ist.

11. Verfahren zur Herstellung eines Monohalogensilans nach Anspruch 1, wobei die Substituenten R⁵, R⁶, R⁷ und R⁸ in der allgemeinen Formel (III) jeweils eine einwertige Kohlenwasserstoffgruppe darstellen, die aus der Gruppe bestehend aus gesättigten oder ungesättigten nicht-cyclischen aliphatischen Gruppen, cyclischen aliphatischen Gruppen, Arylgruppen und Aralkylgruppen ausgewählt ist.

12. Verfahren zur Herstellung eines Monohalogensilans nach Anspruch 11, wobei ein Teil der Wasserstoffatome der Kohlenwasserstoffgruppe durch Halogenatome und/oder Cyanogruppen substituiert ist.

13. Verfahren zur Herstellung eines Monohalogensilans nach Anspruch 1, wobei der Substituent Y in der allgemeinen Formel (III) aus der Gruppe bestehend aus Chlor-, Brom-, Sulfat- und Perchlorationen ausgewählt ist.

14. Verfahren zur Herstellung eines Monohalogensilans nach Anspruch 1, wobei das durch die allgemeine Formel (III) dargestellte Ammoniumsalz aus der Gruppe bestehend aus tertiären Ammoniumsalzen, wie Trimethylaminhydrochlorid, Triethylaminhydrochlorid, Tri-n-butylaminhydrochlorid und Dimethylphenylaminhydrobromid, und quartären Ammoniumsalzen, wie Tetra-n-butylammoniumchlorid, Tetra-n-butylammoniumbromid und Tetramethylammoniumsulfat ausgewählt ist.

15. Verfahren zur Herstellung eines Monohalogensilans nach Anspruch 1, wobei das durch die allgemeine Formel (IV) dargestellte Monohalogensilan aus der Gruppe bestehend aus Dimethylchlorsilan, Dimethylvinylchlorsilan, Allyldimethylchlorsilan, Ethinyldimethylchlorsilan, Cyanoethyldimethyldichlorsilan, Methyldiphenylchlorsilan, Diisopropylchlorsilan und Trimethylbromsilan ausgewählt ist.

## Revendications

1. Procédé de préparation d'un monohalogénosilane représenté par la formule générale suivante (IV):
R₁R₂R₃SiX (IV)
(dans laquelle R₁, R₂ et R₃ représentent chacun indépendamment un atome d'hydrogène ou un groupe hydrocarbure monovalent dans lequel une partie ou la totalité des atomes d'hydrogène peut être substituée avec d'autres atomes et/ou groupes et X représente un atome halogène)
comprenant l'étape de soumettre un organodisiloxane représenté par la formule générale suivante (I):
(R₁R₂R₃Si)₂O (I)
(dans laquelle R₁, R₂ et R₃ représentent chacun indépendamment un atome d'hydrogène ou un groupe hydrocarbure monovalent dans lequel une partie ou la totalité des atomes d'hydrogène peut être substituée avec d'autres atomes et/ou groupes)
et un polyhalogénosilane représenté par la formule générale suivante (II):
R₄ₙSiX₄₋ₙ (II)
(R₄ représente un groupe hydrocarbure monovalent dans lequel une partie ou la totalité des atomes d'hydrogène peut être substituée avec d'autres atomes et/ou groupes, et X représente un atome halogène; et n est 0, 1 ou 2)
en présence de charbon actif ou d'un sel d'ammonium représenté par la formule générale suivante (III):
R₅R₆R₇R₈NY (III)
(R₅, R₆ et R₇ représentent chacun indépendamment un groupe hydrocarbure monovalent et R₈ représente un atome d'hydrogène ou un groupe hydrocarbure monovalent, une partie ou la totalité des atomes d'hydrogène du groupe hydrocarbure étant éventuellement substituée avec d'autres atomes et/ou groupes; et Y représente un anion monovalent)
comme catalyseur.

2. Procédé de préparation d'un monohalogénosilane selon la revendication 1, dans lequel le charbon actif ou le sel d'ammonium est utilisé en une quantité variant de 0,1 à 10 % en poids, basé sur le poids total de l'organodisiloxane et du polyhalogénosilane.

3. Procédé de préparation d'un monohalogénosilane selon la revendication 1, dans lequel la température de réaction varie de 20 à 150°C.

4. Procédé de préparation d'un monohalogénosilane selon la revendication 1, dans lequel la réaction est ralisée sous conditions acides.

5. Procédé de préparation d'un monohalogénosilane selon la revendication 1, dans lequel, dans la formule générale (I), les substituants R₁, R₂ et R₃ représentent chacun un groupe hydrocarbure monovalent et le groupe hydrocarbure est un membre choisi dans le groupe consistant en : les groupes aliphatiques non cycliques saturés ou non, les groupes aliphatiques cycliques, les groupes aryle et les groupes aralkyle.

6. Procédé de préparation d'un monohalogénosilane selon la revendication 5, dans lequel une partie des atomes d'hydrogène du groupe hydrocarbure est substituée avec des atomes halogène et/ou des groupes cyano.

7. Procédé de préparation d'un monohalogénosilane selon la revendication 1, dans lequel l'organodisiloxane représenté par la formule générale (I) est un membre choisi dans le groupe consistant en : le 1,1,3,3-tétraméthyldisiloxane, le 1,1,3,3-tétradiisopropyldisiloxane, l'hexaméthyldisiloxane, le 1,1,3,3-tétraméthyl-1,3-divinyldisiloxane, le 1,3-diallyl-1,1,3,3-tétraméthyldisiloxane, le 1,3-diéthynyl-1,1,3,3-tétraméthyldisiloxane, le 1,3-cyclohexyl-1,1,3,3-tétraméthyldisiloxane, le 1,3-dicyanoéthyl-1,1,3,3-tétraméthyldisiloxane et le 1,3-diméthyl-1,1,3,3-tétraphényldisiloxane.

8. Procédé de préparation d'un monohalogénosilane selon la revendication 1, dans lequel le substituant R₄ du polyhalogénosilane représenté par la formule générale (II) est un groupe hydrocarbure choisi dans le groupe consistant en : les groupes aliphatiques non cycliques satutrés ou non, les groupes aliphatiques cycliques, les groupes aryle et les groupes aralkyle.

9. Procédé de préparation d'un monohalogénosilane selon la revendication 8, dans lequel une partie des atomes d'hydrogène du groupe hydrocarbure est substituée avec des atomes halogène et/ou des groupes cyano.

10. Procédé de préparation d'un monohalogénosilane selon la revendication 1, dans lequel le polyhalogénosilane représenté par la formule générale (II) est un membre choisi dans le groupe consistant en : le diméthyldichlorosilane, le diméthyldibromosilane, le méthyltrichlorosilane, le diphényldichlorosilane, le phényltrichlorosilane, le méthylphényldichlorosilane, le méthylvinyldichlorosilane et le tétrachlorosilane.

11. Procédé de préparation d'un monohalogénosilane selon la revendication 1, dans lequel, dans la formule générale (III), les substituants R₅, R₆, R₇ et R₈ représentent chacun un groupe hydrocarbure monovalent et sont un membre choisi dans le groupe consistant en : les groupes aliphatiques non cycliques satutrés ou non, les groupes aliphatiques cycliques, les groupes aryle et les groupes aralkyle.

12. Procédé de préparation d'un monohalogénosilane selon la revendication 11, dans lequel une partie des atomes d'hydrogène du groupe hydrocarbure est substituée avec des atomes halogène et/ou des groupes cyano.

13. Procédé de préparation d'un monohalogénosilane selon la revendication 1, dans lequel le substituant Y dans la formule générale (III) est un membre choisi dans le groupe consistant en ions chlore, brome, sulfate et perchlorate.

14. Procédé de préparation d'un monohalogénosilane selon la revendication 1, dans lequel le sel d'ammonium représenté par la formule générale (III) est un membre choisi dans le groupe consistant en les sels d'ammonium tertiares tels que le chlorhydrate de triméthylamine, le chlorhydrate de triéthylamine, le chlorhydrate de tri-n-butylamine et le bromhydrate de diméthylphénylamine; et les sels d'ammonium quaternaires tels que le chlorure de tétra-n-butylammonium et le sulfate de tétraméthylammonium.

15. Procédé de préparation d'un monohalogénosilane selon la revendication 1, dans lequel le monohalogénosilane représenté par la formule générale (IV) est un membre choisi dans le groupe consistant en le diméthylchlorosilane, le diméthylvinylchlorosilane, l'allyldiméthylchlorosilane, l'éthynyldiméthylchlorosilane, le cyanoéthyldiméthyldichlorosilane, le méthyldiphénylchlorosilane, le diisopropylchlorosilane et le triméthylbromosilane.
